Europäisches Patentamt

European Patent Office

Office européen des brevets

(19)

(11) Veröffentlichungsnummer: 0 066 234

A1

## (12) EUROPÄISCHE PATENTANMELDUNG

(21) Anmeldenummer: 82104545.7

(22) Anmeldetag: 25.05.82

(51) Int. Cl.³: F 02 B 41/10
F 02 B 61/04

(30) Priorität: 30.05.81 DE 3121607

(43) Veröffentlichungstag der Anmeldung:
08.12.82 Patentblatt 82/49

(84) Benannte Vertragsstaaten:
CH DE FR GB IT LI NL SE

(71) Anmelder: Motoren-Werke Mannheim
Aktiengesellschaft vorm. Benz Abt. stationärer
Motorenbau
Carl-Benz-Strasse 5
D-6800 Mannheim 1(DE)

(72) Erfinder: Syassen, Onno
Mühlweg 55
D-6944 Hemsbach(DE)

(74) Vertreter: Rau, Manfred, Dr. Dipl.-Ing. et al,
Patentanwälte Rau & Schneck Postfach 91 04 80 Lange
Zeile 30
D-8500 Nürnberg 91(DE)

(54) Schiffs-Dieselmotor-Antriebsaggregat.

(57) Ein Schiffs-Dieselmotor-Antriebsaggregat weist einen mit einem Abgas-Turbolader (6) versehenen Dieselmotor (1) auf, der in üblicher Weise über ein vom Motor gesondertes Untersetzungsgetriebe (3) mit einem Propeller (5) gekoppelt ist. Um mit geringstmöglichem konstruktiven Aufwand die Restenergie der aus dem Abgas-Turbolader (6) austretenden Abgase in für den Antrieb des Propellers (5) oder von angetriebenen Verbrauchern (Generator, Pumpen o.ä) zur Verfügung stehende mechanische Energie umzusetzen, ist mit dem Untersetzungsgetriebe (3) eine Niederdruck-Abgasturbine (8) kombiniert, die über eine Abgasleitung (7) mit dem Abgas-Turbolader (6) des Dieselmotors (1) verbunden ist.

Motoren-Werke Mannheim Aktiengesellschaft vorm. Benz Abt.
stationärer Motorenbau, Carl-Benz-Straße 5, 6800 Mannheim 1

----------------------------------------------------------------

"Schiffs-Dieselmotor-Antriebsaggregat"

----------------------------------------------------------------

Die Erfindung betrifft ein Schiffs-Dieselmotor-Antriebsaggregat gemäß dem Oberbegriff des Patentanspruches 1.

Bei derartigen Antriebsaggregaten für Schiffe werden
mittelschnellaufende und schnellaufende Dieselmotoren
mit relativ hohen Drehzahlen eingesetzt, denen Untersetzungsgetriebe nachgeschaltet sein müssen, da bei
derartigen Leistungen der entsprechende Propeller des
Schiffes nur mit einer wesentlich niedrigeren Drehzahl
angetrieben werden darf. Derartige Getriebe sind in der
Regel auch noch als Verzweigungsgetriebe ausgebildet,
weisen also Abtriebe für Generatoren u. dgl. auf. Da die
diesbezüglichen Anforderungen von Fall zu Fall verschieden sind, müssen die Getriebe ohnehin an jeden Einzelfall
angepaßt werden, während die Motoren in weiten Bereichen
unverändert sind. Der mittelschnellaufende Dieselmotor
ist fast immer mit einem Abgas-Turbolader versehen, aus
dem die Abgase noch mit einer erheblichen Restenergie
austreten.

Der Erfindung liegt die Aufgabe zugrunde, zur Leistungs-steigerung und Kraftstofferparnis mit geringstmögli-chem konstruktiven Aufwand die Restenergie der aus dem Abgas-Turbolader austretenden Abgase in für den Antrieb des Propellers zur Verfügung stehende mechanische Energie umzusetzen.

Diese Aufgabe wird erfindungsgemäß durch die kennzeichnenden Merkmale des Patentanspruches 1 gelöst.

Das Wesen der Erfindung liegt darin, daß die Abgasturbine in das Untersetzungsgetriebe integriert oder mit diesem kombiniert ist, das ohnehin in der Regel als Verzweigungsgetriebe ausgebildet ist, und das ohnehin oft konstruktiven Anpassungen an den Einzelfall unterliegt, während der Dieselmotor selber weitgehend unverändert bleiben kann. Es bedarf lediglich einer kurzen Leitung zwischen Abgas-Turbolader und Abgasturbine, durch die das aus dem Abgas-Turbolader austretende Abgas zur Abgasturbine geleitet wird. Die von der Abgasturbine abgegebene mechanische Energie wird über eine Drehzahluntersetzung auf die Propellerwelle des Antriebes oder eine andere Abtriebswelle des Getriebes abgegeben. Die erfindungsgemäßen Maßnahmen führen also mit relativ geringem konstruktiven Aufwand den Motor zu einer höheren Leistung der Gesamt-Antriebsanlage und/oder zu einer Kraftstoffverbrauchssenkung.

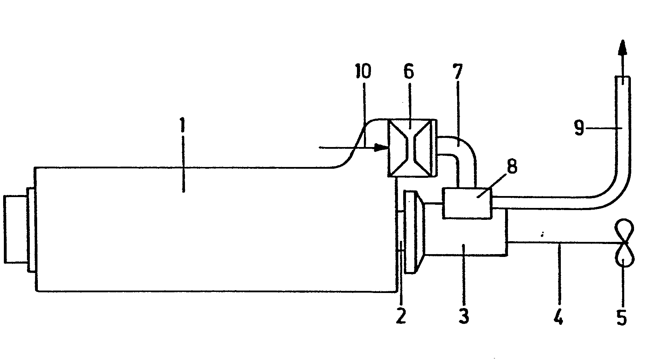

Einzelheiten ergeben sich aus der nachfolgenden Erläuterung eines Ausführungsbeispiels der Erfindung anhand einer schematischen Zeichnung. In der Zeichnung ist ein Dieselmotor 1 dargestellt, an dessen Welle 2 abtriebsseitig ein Untersetzungsgetriebe 3 angeflanscht ist, das oft auch noch als Verzweigungsgetriebe mit (meist schneller drehenden) anderen Abtrieben, z. B. für Generatorantrieb, ausgebildet ist. Dieses Untersetzungsgetriebe 3 ist abtriebsseitig an eine Propellerwelle 4 angeflanscht, die an ihrem anderen Ende einen Propeller 5 trägt. Es handelt sich bei dieser Anordnung um ein Schiffs-Dieselmotor-Antriebsaggregat. Am Dieselmotor 1 ist in üblicher Weise ein Abgas-Turbolader 6 angeflanscht, der einerseits mit einem Lufteintritt 1o für die zu komprimierende Ladeluft und einem nicht dargestellten Luftaustritt für die komprimierte Ladeluft und andererseits mit einem nicht dargestellten Eintritt für die Motor-Abgase und einem Austritt für diese Abgase versehen ist, denen im Abgas-Turbolader 6 ein Teil ihrer thermischen Energie entzogen wird. An diesen Abgasaustritt ist eine Leitung 7 angeschlossen, die zu einer Niederdruck-Abgasturbine 8 führt, aus der die Abgase nach weitgehendem Entzug ihrer Restenergie durch ein Abgasrohr 9 in die Atmosphäre abgeleitet werden.

Die Niederdruck-Abgasturbine 8 ist in das Untersetzungsgetriebe 3 mechanisch integriert bzw. mit diesem kombiniert, d. h. der Abtrieb der Abgasturbine ist als zusätzlicher Eingang auf das Untersetzungsgetriebe 3 geschaltet. Nach entsprechender mechanischer Untersetzung geht die Leistung der Abgasturbine 8 gleichermaßen wie die von der Welle 2 des Dieselmotors 1 kommende Leistung auf die Propellerwelle 4 oder einen der (schnellerlaufenden) Abtriebe.

Bei Mehrmotoren-Anlagen, die auf ein Getriebe, d. h. auch auf eine Propellerwelle arbeiten, bietet sich an, eine entsprechend größere Niederdruck-Abgasturbine mit dem Getriebe zu kombinieren und die Abgase aller Motoren auf diese Abgasturbine zu leiten.

Schließlich kann es unter bestimmten Bedingungen auch zweckmäßig sein, die Abgase von Hilfsmaschinen ebenfalls der mit dem Getriebe kombinierten Niederdruck-Abgasturbine zuzuführen.

- 5 -

Patentansprüche

1. Schiffs-Dieselmotor-Antriebsaggregat mit einem mittels eines Abgas-Turboladers (6) aufgeladenen Dieselmotor (1), der über ein vom Motor gesondertes Untersetzungsgetriebe (3) mit einem Propeller (5) gekoppelt ist, dadurch gekennzeichnet, daß mit dem Untersetzungsgetriebe (3) eine Niederdruck-Abgasturbine (8) kombiniert ist, die über eine Leitung (7) mit dem Abgas-Turbolader (6) des Dieselmotors (1) verbunden ist.

2. Schiffs-Dieselmotor-Antriebsaggregat mit mehreren mittels Abgas-Turboladern aufgeladenen Dieselmotoren (1), die über ein gesondertes Untersetzungsgetriebe (3) mit einem Propeller (5) gekoppelt sind, nach Patentanspruch 1, dadurch gekennzeichnet, daß mit dem Untersetzungsgetriebe (3) eine Niederdruck-Abgasturbine (8) kombiniert ist, die über Abgasleitungen mit den Abgas-Turboladern der Dieselmotoren verbunden ist.

3. Schiffs-Dieselmotor-Antriebsaggregat nach Patentanspruch 1 oder 2, dadurch gekennzeichnet, daß auch die Abgase von Hilfsmaschinen der Niederdruck-Abgasturbine zugeführt werden.

0066234

1/1

0066234

**Europäisches Patentamt**

**EUROPÄISCHER RECHERCHENBERICHT**

Nummer der Anmeldung

EP 82 10 4545

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C- 862 264 (SULZER) *Seite 1, Zeilen 1-5; Seite 3, Zeilen 42-79; Seite 4, Zeilen 46-85; Figuren 7,9,10* | 1 | F 02 B 41/10 F 02 B 61/04 |
| | --- | | |
| Y | FR-A-2 404 748 (HARVESTER) *Seite 4, Zeile 26 bis Seite 5, Zeile 4; Figur 2* | 1 | |
| | --- | | |
| A | DE-B-1 040 839 (DAIMLER-BENZ) *Spalte 3, Zeilen 29-45; Figur 1* | 1 | |
| | ----- | | |

RECHERCHIERTE
SACHGEBIETE (Int. Cl. ³)

F 02 B
F 01 N
F 02 G

Der vorliegende Recherchenbericht wurde für alle Patentansprüche erstellt.

| Recherchenort | Abschlußdatum der Recherche | Prüfer |
|---|---|---|
| DEN HAAG | 30-08-1982 | KOOIJMAN F.G.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03.82